Europäisches Patentamt

European Patent Office

Office européen des brevets

(11) Numéro de publication: **0 181 789**

**A1**

# (12) DEMANDE DE BREVET EUROPEEN

(21) Numéro de dépôt: **85401892.6**

(22) Date de dépôt: **27.09.85**

(51) Int. Cl.⁴: **H 04 N 1/00**
**H 04 N 1/06**

(30) Priorité: **28.09.84 FR 8415007**

(43) Date de publication de la demande:
**21.05.86 Bulletin 86/21**

(84) Etats contractants désignés:
**DE GB**

(71) Demandeur: **SOCIETE EUROPEENNE DE PROPULSION
(S.E.P.) Société Anonyme dite:
3, avenue du Général de Gaulle
F-92800 Puteaux(FR)**

(72) Inventeur: **Rosier, Jean-Claude Georges
8, Chemin du Roy Giverny
F-27620 Gasny(FR)**

(74) Mandataire: **Hasenrader, Hubert et al,
Cabinet BEAU DE LOMENIE 55, rue d'Amsterdam
F-75008 Paris(FR)**

(54) **Restituteur d'images haute résolution autorisant le développement en temps réel des films insolés.**

(57) Restituteur d'images de haute résolution comprenant un porte film (10) pour recevoir un film plan revêtu d'une matière photosensible, une source lumineuse (22) produisant un faisceau (18) lumineux, un modulateur (28) sur le trajet du faisceau lumineux et un dispositif (16, 14) pour balayer par lignes successives (42) ledit film au moyen dudit faisceau (20), carctérisé en ce qu'il comprend des moyens amovibles (48) pour recevoir une bobine (46) débitrice de film (44) enroulé en continu, des moyens (54) pour entraîner le film hors de la bobine le long d'un plan d'approvisionnement (52) de film, des moyens (60) pour plaquer une portion de film sur le porte film (10), des moyens de découpe transversale (62) du film, des moyens d'entraînement (70, 74) du film hors du porte film le long d'un plan d'évacuation (72), des moyens amovibles (76) pour recevoir les portions de film exposées et découpées évacuées du porte film (12).

Croydon Printing Company Ltd.

Fig 1

RESTITUTEUR D'IMAGES HAUTE RESOLUTION AUTORISANT LE DEVELOPPEMENT
EN TEMPS REEL DES FILMS INSOLES

La présente invention concerne un appareil de restitution
d'images de haute résolution.

On rencontre ce type d'appareils notamment dans les
stations terrestres qui assurent le traitement des informations
reçues depuis des satellites d'exploration ou de surveillance.

Compte tenu de leur degré de sophistication, on concevra
aisément qu'il s'agit là d'appareils particulièrement coûteux et
qu'en contrepartie, on cherche à augmenter leur capacité de
production.

Pour situer les difficultés rencontrées, on mentionnera
que les images obtenues ont une dimension de l'ordre de 250mm x
250mm et comportent chacune 20.000 x 20.000 points image.

De manière typique, ces images sont obtenues par balayage
d'un film photosensible au moyen d'un faisceau lumineux modulé en
intensité, le balayage étant effectué ligne par ligne. Le film est
disposé sur un support avec une grande précision afin que la tache
du faisceau sur le film soit parfaitement constante au cours du
balayage.

Dans une première génération d'appareils connus, le
support consiste en un tambour cylindrique contre lequel le film
est plaqué extérieurement et le balayage est assuré par la
rotation du tambour autour de son axe, combinée avec la
translation de l'optique de renvoi du faisceau.

Ces appareils nécessitent l'intervention fréquente d'un
opérateur, en particulier pour installer le film sur le tambour et
cette opération est rendue malaisée par le fait qu'elle doit être
effectuée dans l'obscurité.

Dans une seconde génération d'appareils connus, le film
est conditionné en bobine et déroulé, par incrément correspondant
à la longueur d'une image, puis enroulé sur une bobine réceptrice
après exposition. Dans ce cas, le support est fixe et présente une
surface concave semi-cylindrique contre laquelle est plaqué le
film pendant le temps d'exposition d'une image.

Le développement des images ne peut intervenir que lorsque la bobine a été totalement débitée. Ceci présente divers inconvénients:

En premier lieu, il s'écoule un temps relativement long entre l'exposition et le développement du film et il en résulte une dégradation des images latentes. Circonstance aggravante, le développement des images s'effectuant en ordre inverse de leur exposition, les premières images exposées seront donc les plus dégradées.

En second lieu, on ne peut effectuer aucun contrôle avant que la première image ne soit développée. Si, à la suite d'une erreur, les paramètres d'exposition et/ou cadrage des images sont défectueux, on se trouve dans l'obligation de mettre au rebut un grand nombre d'images, le temps de fonctionnement correspondant du restituteur étant perdu.

On pourrait naturellement imaginer de coupler directement un appareil de ce type avec un banc de développement. On constate rapidement qu'une telle solution serait irréaliste dans la mesure où il faudrait assurer un parfait synchronisme entre les deux appareils. De plus, une telle solution reviendrait à sous-utiliser le banc de développement puisque la capacité habituelle de ce dernier est largement supérieure (au moins 2 à 3 fois) à celle du restituteur. Enfin, le banc de développement met en oeuvre des composés chimiques qu'il est préférable d'éloigner de la bobine de film vierge à l'entrée du restituteur.

Dans le but de pallier ces divers inconvénients, la présente invention propose un restituteur d'images de haute résolution comprenant un porte film pour recevoir un film plan revêtu d'une matière photosensible, une source lumineuse produisant un faisceau lumineux, un modulateur sur le trajet du faisceau lumineux et un dispositif pour balayer par lignes successives ledit film au moyen dudit faisceau, caractérisé en ce qu'il comprend des moyens amovibles pour recevoir une bobine débitrice de film enroulé en continu, des moyens pour entraîner le film hors de la bobine le long d'un plan d'approvisionnement de film, des moyens pour plaquer une portion de film sur le porte film, des moyens de découpe transversale du film, des moyens d'entraînement du film hors du porte film le long d'un plan d'évacuation, des moyens amovibles pour recevoir les portions de film exposées et découpées évacuées du porte film.

L'invention sera maintenant décrite en se référant aux dessins annexés, dans lesquels;

la figure 1 est un schéma de principe, en perspective, d'un restituteur d'images conforme à l'invention,

la figure 2 est une vue schématique en plan d'une première variante de restituteur selon l'invention,

la figure 3 est une vue schématique latérale d'une seconde variante du restituteur selon l'invention, et

la figure 4 est une vue schématique, en perspective, d'une troisième variante du restituteur selon l'invention.

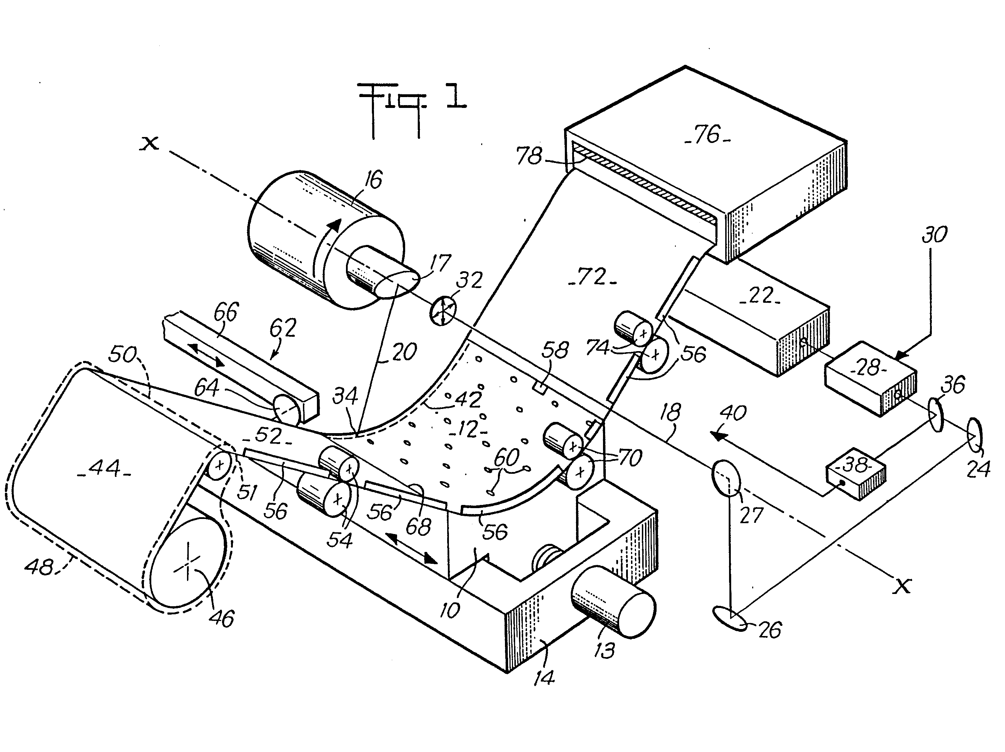

Ainsi que l'indique le schéma de principe de la figure 1, la partie centrale du restituteur comprend un berceau porte film 10 présentant une surface concave semi-cylindrique 12 destinée à recevoir des tronçons de film photosensible comme il sera vu ci-après.

Le berceau 10 est moulé à coulissement linéaire, sous la commande d'un moteur pas à pas 13 sur un guide 14, la direction de coulissement étant parallèle à l'axe XX de la surface 12.

Un équipage tournant 16 à miroir oblique 17, monté à rotation autour de l'axe XX renvoie un faisceau lumineux 18 dirigé suivant l'axe XX sous forme d'un faisceau de balayage 20 dirigé perpendiculairement à la surface du berceau.

De manière connue en soi, le faisceau 18 est produit par une source lumineuse 22, par exemple un laser, et il est aiguillé suivant l'axe XX à l'aide de miroirs 24, 26, 27. Le faisceau traverse un modulateur 28 qui module l'intensité du faisceau en fonction de données images acheminées via une entrée de commande 30. Il traverse également une optique focalisatrice 32, de manière à produire une tache 34 de diamètre prédéterminé sur le film. Un miroir semi-transparent 36 prélève une partie du faisceau en aval du modulateur 28 et la renvoie vers une cellule de mesure 38 dont le signal de sortie 40 est utilisé dans un circuit d'asservissement.

L'équipage tournant 16 tourne en permanence à vitesse régulière autour de l'axe XX, de sorte qu'à chaque rotation, et sur un angle d'environ 90$^O$, la tache décrit une ligne 42 sur le film plaqué sur le berceau. Pendant le reste de la rotation où le faisceau n'est pas dirigé vers le film, on commande le déplacement du berceau 10 d'une distance incrémentale correspondant à l'espacement souhaité entre lignes. Le balayage de la ligne suivante s'effectue lorsque le faisceau est à nouveau dirigé vers le film.

Naturellement, l'ensemble de l'appareil est monté sur un châssis principal et enfermé dans un capot étanche à la lumière, qui n'ont pas été représentés par souci de clarté.

L'approvisionnement du film et son évacuation sont assurés de la manière suivante:

Le film 44 est enroulé sur un mandrin 46, l'émulsion photosensible orientée vers l'extérieur, et le rouleau ainsi constitué est stocké dans une cassette 48 amovible étanche à la lumière, l'amorce de film sortant de la cassette entre deux lèvres de protection 50, 51.

Cette cassette peut par conséquent être commodément chargée en chambre noire, puis transportée à la lumière ambiante jusqu'à l'appareil dans lequel elle est montée sur le chassis.

L'amorce de film est guidée sur un plan d'approvisionnement incliné 52 de façon à être approximativement tangent à l'un des bords de la surface concave 12 du berceau porte film.

L'avance du film sur le plan d'approvisionnement est assurée au moyen d'une paire de galets d'approvisionnement motorisés 54 qui pincent la bordure du film, le guidage de ce dernier étant assuré par une reglette latérale 56 contre lequel le film est constamment en butée, par exemple grâce à une orientation legèrement oblique des galets d'approvisionnement.

L'amorce du film atteint le berceau et glisse sur sa surface concave jusqu'à rencontrer un détecteur 58 placé à l'autre extrémité du berceau. Lorsque le détecteur est déclenché, le moteur des galets d'approvisionnement 54 est stoppé.

La portion de film recouvrant le berceau est alors parfaitement plaqué par aspiration sur sa surface concave. A cet effet, le berceau comporte plusieurs trous 60 de petite taille régulièrement espacés le long de la surface concave et qui sont raccordés à un dispositif d'aspiration (non-représenté).

Le restituteur comprend également des moyens de découpe du film, sous la forme d'un massicot 62 qui, dans le mode de réalisation illustré, consiste en un massicot à galet, dont le galet 64 est porté par une potence 66 mobile parallèlement à l'axe XX et coopère avec une arête 68 placée le long du bord aval du plan d'approvisionnement, c'est-à-dire le bord en regard du berceau.

On notera que le berceau porte également une paire de galets de transfert 70 dont le rôle sera explicité ci-après. Pendant la phase d'alimentation du film décrite ci-avant, ces galets sont maintenus écartés l'un de l'autre de manière à ne pas perturber l'avancée du film.

Un fois que le film est plaqué sur le berceau et découpé à l'aide du massicot, commence la phase d'impression du film comme il a été décrit ci-avant.

Lorsque l'impression est terminée, le berceau porte film revient automatiquement à sa position de départ. Les galets de transfert 70 sont rapprochés l'un de l'autre puis mis en marche pour entraîner la feuille de film hors du berceau et le long d'un plan d'éjection 72, similaire au plan d'approvisionnement décrit ci-avant et orienté également approximativement suivant la tangente au bord opposé du berceau.

Sur le plan d'éjection, la feuille de film est reprise par un paire de galets d'éjection 74 qui la repoussent jusqu'à l'intérieur d'une cassette réceptrice 76 étanche à la lumière, également amovible.

La cassette réceptrice est également fixée sur le chassis et contre le capot de l'appareil et porte un volet d'obturation 78 qui est automatiquement ouvert lorsque la cassette est montée sur l'appareil et fermé lorsqu'elle est retirée. De manière analogue, le capot porte un volet d'obturation (non-représenté) qui se ferme automatiquement lorsque la cassette est retirée.

Grâce à ces dispositions, il est possible d'extraire la cassette réceptrice aussitôt que la première image d'une série a été impressionnée et de procéder immédiatement à son développement, avec le double avantage d'éviter la dégradation de l'image latente et de permettre le contrôle en temps quasi-réel.

Ce contrôle est en effet indispensable lorsqu'on réalise que la commande de l'appareil et le séquencement des données images sont sous la dépendance de systèmes informatiques qui permettent de faire varier les divers paramètres de restitution (cadrage, définition, échelle des contrastes, choix des scènes, etc...) et qu'une seule erreur de programmation (par exemple un cadrage décentré) suffirait à mettre au rebut toute une série d'images.

Ici, le développement très rapide des images impressionnées, ou d'un choix d'images (la première et/ou la deuxième, ou encore toute image d'un rang prédéterminé) permet de se rendre compte dans le plus bref délai des erreurs éventuelles et de les rectifier immédiatement avant de poursuivre la restitution d'une série d'images.

Bien entendu, pendant le temps que le ou les opérateurs consacrent à diverses mises au point en vue de la restitution d'une nouvelle série d'images, l'appareil peut continuer à fonctionner et impressionner des séries d'images pour lesquelles les mises au point ont déjà été effectuées.

Si besoin est, il est possible d'intercaler entre deux images d'une série en cours d'impression, une image test d'une série pour laquelle les paramètres sont en cours de mise au point, image test qui peut être développée isolément, indépendemment des images précédentes et suivantes.

La présentation des images insolées, feuille après feuille, recueillies dans la cassette de réception film, permet à tout instant, de développer la ou les images que contient la cassette.

Il est également possible de coupler directement le restituteur à un banc de développement automatique de film, au moyen d'un tapis transfert interposé etre le plan d'éjection des films et ce banc de développement automatique.

En effet, ce couplage n'est rendu possible, que grâce à la production d'images par le restituteur en plans films. Les deux appareils (restituteur et banc de développement automatique) peuvent ainsi fonctionner en mode totalement asynchrone. De plus les arrêts de l'un des deux appareils ne perturbent pas le fonctionnement de l'autre.

Cet agencement permet également très facilement de modifier les priorités de développement en intervertissant manuellement une ou plusieurs images dans le magasin d'alimentation.

A partir de ce schéma de base, l'invention peut faire l'objet de nombreuses variantes. Parmi ces variantes et de manière non-limitative, on citera:

- On prévoira plusieurs cassettes débitrices et plusieurs cassettes  réceptrices de façon à raccourcir au maximum les temps d'arrêt de la machine.

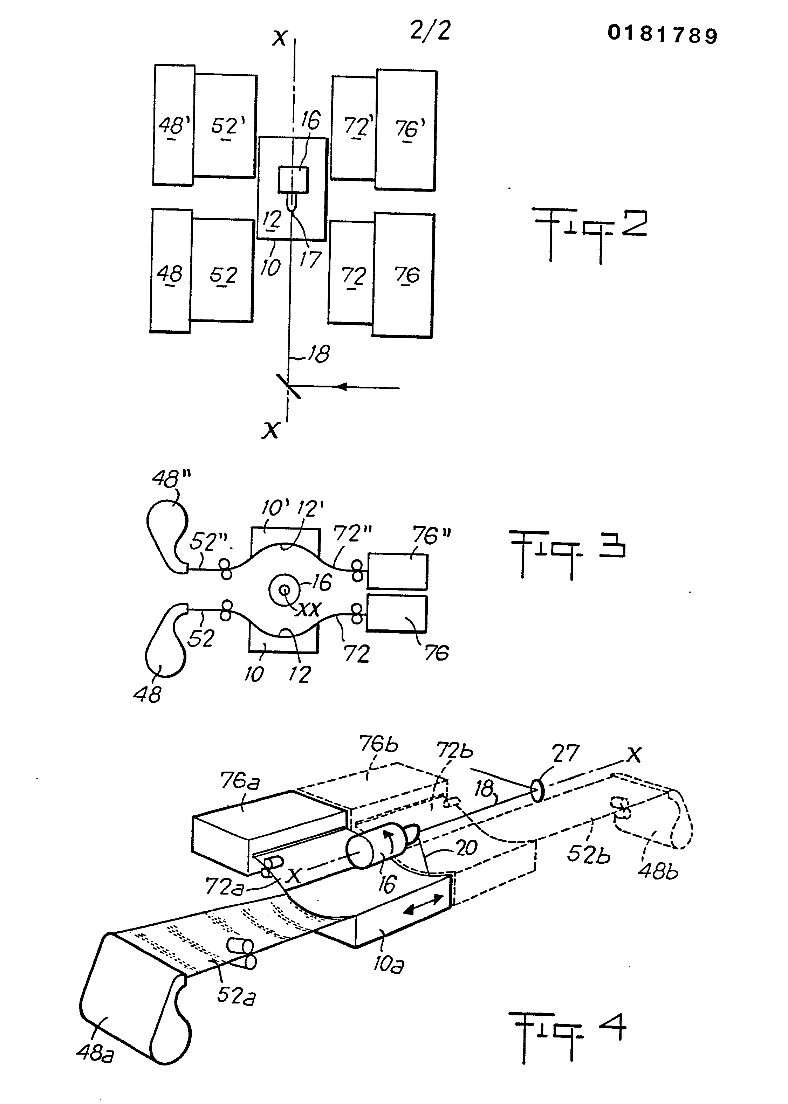

- Pour éviter la perte de temps représentée par le retour du berceau porte film jusqu'à sa position de départ pour évacuation de la feuille exposée et la mise en place d'un nouveau tronçon de film vierge, on peut prévoir conformément à la figure 2, une seconde chaine "cassette débitrice 48'-plan d'approvisionnement 52'-plan d'évacuation 72'-cassette réceptrice 76' parallèle à la première (48, 52, 72, 76) et en correspondance de la position atteinte par le berceau porte-film 10 en fin d'impression de l'image. Le berceau restera donc à cette position durant l'évacuation de l'image exposée via le plan d'évacuation 72' de la seconde chaine et le chargement d'un nouveau tronçon de film depuis la cassette 48'. L'impression de cette seconde feuille s'effectue alors pendant la course de retour du berceau. Dans ce cas, l'appareil peut comporter, au choix, un massicot commun aux deux chaines ou un massicot pour chaque chaine.

- Pour tirer parti du temps pendant lequel l'equipage tournant 16 à miroir incliné balaye les 270$^o$ entre la fin de balayage d'une ligne et le début de la ligne suivante, on peut prévoir un second berceau 10' (voir figure 3), diamétralement opposé par rapport au premier 10 et qui pourra être desservi soit par la même chaine "cassette débitrice-plan d'approvisionnement-plan d'évacuation-cassette réceptrice" que le premier berceau, avec adjonction d'aiguillages appropriés en amont et en aval, soit par une chaine distincte superposée à la première 48'', 52'', 72'', 76''.

- Les deux variantes précédentes peuvent également être combinées en un appareil à deux berceaux diamétralement opposés et deux (ou quatre) chaines de circulation du film parallèlles (ou parallèles et superposées).

- Enfin, le berceau pourra être disposé parallèlement à la direction d'alimentation du film (figure 4). Dans ce cas, le plan d'alimentation 52a aura une surface en forme progressive de gouttière de manière à conférer progressivement au film un profil semi-cylindrique lors de son introduction sur le berceau 10a. L'évacuation du film 72a pourra s'effectuer soit parallèlement à la direction d'approvisionnement en fin de course aller, ou en fin de course retour du chariot, soit perpendiculairement de la même manière que décrite précédemment (comme illustré à la figure). Ici aussi on pourra prévoir deux cassettes débitrices 48a, 48b et deux plans d'approvisionnement 52a, 52b disposés en opposition aux deux extrémités de l'appareil ainsi que deux chariots diamétralement opposés.

- L'appareil qui a été décrit est essentiellement destiné à la réalisation d'images en noir et blanc, mais il va de soi qu'il pourrait tout aussi bien s'agir d'un appareil destiné à la réalisation d'images en couleur. Dans ce cas, le faisceau lumineux sera consitué par la superposition de trois faisceaux de longueurs d'onde représentatives de trois couleurs fondamentales, ces trois faisceaux étant modulés séparément puis superposés à l'aide de miroirs et de lames semi-réfléchissantes.

On pourrait concevoir également un appareil dans lequel le berceau est fixe et l'équipage tournant est monté en translation le long de l'axe XX. Cependant, en raison des accélérations/décélérations très brusques lors des déplacements incrémentaux le long de l'axe XX, il se produirait des vibrations de l'équipage, et donc du miroir tournant, ce qui nuirait à la netteté de l'image obtenue. Il serait en outre difficile de réaliser l'appareil de manière a assurer constamment la coincidence parfaite de l'axe de rotation de l'équipage et de l'axe géométrique de berceau tout au long de la translation de l'équipage.

Pour ces raisons, on préférera un mode de réalisation dans lequel l'équipage tournant est fixe et le berceau est mobile en translation.

0181789

REVENDICATIONS

1.    Restituteur d'images de haute résolution comprenant un porte film (10) pour recevoir un film plan revêtu d'une matière photosensible, une source lumineuse (22) produisant un faisceau (18) lumineux, un modulateur (28) sur le trajet du faisceau lumineux et un dispositif (16, 14) pour balayer par lignes successives (42) ledit film au moyen dudit faisceau (20), caractérisé en ce qu'il comprend des moyens amovibles (48) pour recevoir une bobine (46) débitrice de film (44) enroulé en continu, des moyens (54) pour entraîner le film hors de la bobine le long d'un plan d'approvisionnement (52) de film, des moyens (60) pour plaquer une portion de film sur le porte film (10), des moyens de découpe transversale (62) du film, des moyens d'entrainement (70,74) du film hors du porte film le long d'un plan d'évacuation (72), des moyens amovibles (76) pour recevoir les portions de film exposées et découpées évacuées du porte film (12).

2.    Restituteur selon la revendication 1, caractérisé en ce que ledit porte film consiste en un berceau (10) pourvu d'une surface (12) réceptrice du film, concave, semi-cylindrique présentant un axe (XX), ledit berceau étant monté mobile en translation parallèlement audit axe.

3.    Restituteur selon la revendication 2, caractérisé en ce que lesdits moyens de découpe transversale consistent en un massicot (62) situé à l'extrémité du plan d'approvisionnement voisine du berceau (10).

4.    Restituteur selon la revendication 3, caractérisé en ce que ledit massicot (62) comprend un galet (64) porté par une potence (66) mobile transversalement au plan d'approvisionnement (52) et une arête (68) placée à l'extrémité du plan d'approvisionnement voisin dudit berceau (10).

5.    Restituteur selon l'une quelconque des revendications 2 à 4, caractérisé en ce que lesdits moyens d'entrainement du film (54, 70, 74) consistent chacun en une paire de galets motorisés montés respectivement en bordure du plan d'approvisionnement, du

0181789

berceau et du plan d'évacuation.

6.    Restituteur selon l'une quelconque des revendications 2 à
5 , caractérisé en ce que ledit berceau comporte plusieurs trous
(60) débouchant le long de ladite surface semi-cylindrique (12) et
reliés à un dispositif d'aspiration.

7.    Restituteur selon l'une quelconque des revendications 2 à
6, caractérisé en ce qu'il comprend des moyens (24, 26, 27)
destinés à aiguiller ledit faisceau (18) en coincidence avec l'axe
(XX) de la surface semi-cylindrique du berceau, et un équipage
tournant (16) à miroir incliné (17), entraîné en rotation autour
dudit axe (XX) et réflechissant ledit faisceau (20)
perpendiculairement à la surface semi-cylindrique (12).

8.    Restituteur selon l'une quelconque des revendications 2 à
7, caractérisé en ce que l'axe de la surface semi-cylindrique du
berceau est disposé transversalement à la direction d'avancement
du film sur le plan d'approvisionnement (53).

9.    Restituteur selon l'une quelconque des revendications 2 à
7, caractérisé en ce que l'axe de la surface semi-cylindrique du
berceau est disposé sensiblement parallèlement à la direction
d'avancement du film sur le plan d'approvisionnement.

10.    Restituteur selon l'une quelconque des revendications 2 à
9, caractérisé en ce que l'axe de la surface semi-cylindrique du
berceau est disposé transversalement à la direction d'avancement
du film sur le plan d'évacuation (72).

11.    Restituteur selon l'une quelconque des revendications 2 à
9, caractérisé en ce que l'axe de la surface semi-cylindrique du
berceau est disposé parallèlement à la direction d'avancement du
film sur le plan d'évacuation.

12.    Restituteur selon l'une quelconque des revendications 2  à
11, caractérisé en ce qu'il comprend un second berceau (10') de
construction identique au premier (10) et disposé symétriquement
au premier berceau par rapport à l'axe (XX).

13.    Restituteur selon l'une quelconque des revendications 2 à
12, caractérisé en ce qu'il comprend deux plans d'approvisionnement (52, 52') et deux plans d'évacuation (72, 72') disposés en parallèle.

14.     Restituteur selon la revendication 12, caractérisé en ce qu'il comprend deux plans d'approvisionement et deux plans d'évacuation (72, 72') disposés en superposition.

15.     Restituteur selon l'une quelconque des revendications 1 à 14, caractérisé en ce que lesdits moyens amovibles destinés à recevoir une bobine débitrice de film consistent en une cassette (48) ayant un boîtier (50, 51) entre lesquelles passe l'amorce du film (44) de l'intérieur vers l'extérieur du boîtier.

16.     Restituteur selon l'une quelconque des revendications 1 à 15, caractérisé en ce que lesdits moyens amovibles destinés à recevoir les portions de film exposées et découpées consistent en une cassette réceptrice (76) ayant un boîtier étanche à la lumière et pourvu d'un volet d'obturation (78) situé en correspondance dudit plan d'évacuation.

17.     Restituteur selon l'une quelconque des revendications 1 à 16, caractérisé en ce que ledit plan d'approvisionnement (52) et ledit plan d'évacuation (72) sont pourvus de règlettes (56) de guidage de film le long d'au moins une de leurs marges.

18.     Restituteur selon l'une quelconque des revendications 1 à 14, caractérisé en ce qu'il est associé à un banc de développement d'images, au moyen d'un tapis transfert interposé entre ledit plan d'évacuation et ledit banc de développement.

Fig. 1

2/2    0181789

Fig. 2

Fig. 3

Fig. 4

Office européen
des brevets

**RAPPORT DE RECHERCHE EUROPEENNE**

0181789

Numero de la demande

EP 85 40 1892

## DOCUMENTS CONSIDERES COMME PERTINENTS

| Categorie | Citation du document avec indication, en cas de besoin, des parties pertinentes | Revendication concernée | CLASSEMENT DE LA DEMANDE (Int. Cl.4) |
|---|---|---|---|
| A | PATENTS ABSTRACTS OF JAPAN, vol. 7, no. 13 (E-153)[1158], page 122 E 153, 19 janvier 1983; & JP - A - 57 171 878 (OLYMPUS KOGAKU KOGYO K.K.) 22-10-1982 | 1-3,5, 7,8,10 ,17 | H 04 N 1/00 H 04 N 1/06 |
| A | US-A-3 781 902 (SHIM AND STELBEN) * Colonne 4, ligne 56 - colonne 5, ligne 2; colonne 6, lignes 35-43; colonne 7, lignes 31-38; colonne 7, ligne 51 - colonne 8, ligne 5; colonne 9, lignes 20-26; figure 5 * | 1,3,5- 7,15 | |
| A | SU-A- 174 660 (OGANOV et al.) * Figure * | 1 | |

DOMAINES TECHNIQUES RECHERCHES (Int. Cl.4)

H 04 N 1/00

Le présent rapport de recherche a été établi pour toutes les revendications

| Lieu de la recherche | Date d'achèvement de la recherche | Examinateur |
|---|---|---|
| LA HAYE | 06-01-1986 | HAZEL J.F. |